# EUROPEAN PATENT APPLICATION

(11) **EP 2 391 188 A1**
(43) Date of publication of application: **30.11.2011**
(21) Application number: 10251971.7
(22) Date of filing: 19.11.2010
(51) Int. Cl.: H05B 37/02, H05B 33/08

(54) **Stepped dimming device for LED lamp**

(30) Priority: 26.05.2010 CN 201010192666
(71) Applicant: Mass Technology (H.K.) Limited, Kowloon, Hong Kong (CN)
(72) Inventor: Foo, Onn Fah, Kowloon, Hong Kong (CN)
(74) Representative: Powell, Timothy John

(57) **Abstract**

The present invention relates to a novel dimming device for a LED lamp capable of effecting a stepped dimming of the LED lamp by detecting a momentary variation in on/off states of the power switch, enabling the LED lamp to vary to work in a plurality of working states in a cyclic manner according to a predetermined program. The dimming device the present invention overcomes the technical problems of using a regular power switch to effect dimming and allows the use of the regular power switch to effect the stepped dimming of LED lamp. The present invention may also use an external DC signal source to effect the stepped dimming of LED lamp. According to the present invention, a user may adjust the brightness of the LED lamp when needed, which not only facilitates the daily life of the user but also effectively save the energy.

## Description

### Field of the Invention

The present invention relates to the field of light emitting diode (LED) illumination, and more particularly to a dimming device for LED lamp capable of performing stepped dimming.

### Background of the Invention

Along with the progress in science and technologies, semiconductor illumination devices, which are energy saving, environmental friendly and long in lifespan, have found a wide range of applications in various fields, particularly large power LED lamps. While in use, the illumination effect of a LED lamp sometimes may be affected if the lighting is too strong or relatively weak, therefore a dimming operation is desired. Presently, the LED lamp generally has a fixed luminance. The currently available dimming systems are usually relatively complicated and expensive, and thus cannot fulfill the different requirements of application environments.

Japanese patent application no. JP 2007207734 A discloses a dimmable LED lamp, comprising a plurality of LEDs connected to the output of an A/D converter and/or the output of a circuit, wherein the overall brightness of the LEDs is adjusted by controlling the number of illuminated LEDs. This application does not allow for the controlling of brightness of each LED separately.

Chinese patent no. ZL200820027042 discloses a dimmable LED street lamp, which allows to vary the arrangement of the LEDs by machining planes of different angles on a mounting plate of the LED lamp, so that the illumination coverage can be varied flexibly by adjusting refraction angles of the machined planes with respect to the spacing between lamp posts, the heights of the lamp posts, the width of road and the like. According to this patent, the illumination coverage of the LED street lamp is varied by altering structurally the mounting plate, and the invention could not adjust the light output of the LED lamp.

Chinese patent ZL200510072474.8 issued to the applicant of the present application discloses a stepped dimming ballast for fluorescent lamps, which is dimmable by a power switch. However, the ballast for fluorescent lamps is not applicable directly to a LED lamp.

There is not found in the prior art a technical solution in which the LED lamp is dimmable by use of a regular power switch.

### Summary of the Invention

An object of the present invention is to overcome the foregoing defects in the prior art by providing a stepped dimming device for LED lamp, which is capable of effecting the stepped dimming using a regular power switch and/or using a dimming signal from an external DC signal source. These two dimming approaches are independent from each other, and the dimming device of the present invention could comprise either one of these dimming approaches, or it could comprise both of them.

Accordingly, the present invention provides a dimming device for a LED lamp, which comprises:
a filter and rectifier circuit connected to a power supply through a power switch for converting an input AC voltage into a DC pulse voltage;
a switch power supply circuit module having a terminal connected to the filter and rectifier circuit for converting the DC pulse voltage into a stable DC voltage which is supplied to a LED lamp load;
a feedback circuit module having a terminal connected to another terminal of the switch power supply circuit module, the feedback circuit module being capable of sampling a voltage and/or current signal of the LED lamp load and delivering a feedback signal to the switch power supply circuit module responsive to the sampled signal;
a dimming signal generation module comprising a switch signal detection circuit module for detecting a momentary variation in on/off states of the power switch and converting the momentary variation into a dimming signal which is delivered to a dimming control module, or an analog signal detection circuit module for detecting a dimming signal received from an external signal source and delivering the detected signal to the dimming control module, or a combination thereof;
wherein the dimming control module which receives the dimming signal has a terminal connected to the feedback circuit module, and generates and delivers a dimming control signal to the feedback circuit module in response to the received dimming signal, and the feedback circuit module is then controlled by the dimming control module to provide the feedback signal to the switch power supply circuit module, thereby controlling alteration of a predetermined set of working states of the LED lamp load in a cyclic manner to effect the dimming in a stepped fashion.

According to the present invention, every time the switch signal detection circuit module detects the switching-on of the power switch within the predetermined duration after switching-off of the power switch, the dimming signal is generated and delivered to the dimming control module which in turn generates the dimming control signal for controlling the alteration of a brightness state of the LED lamp load in the preset cycle; the predetermined working brightness states of the LED lamp load are varied through repeatedly switching the power switch on and off, wherein the switching-off duration is shorter than the predetermined duration.

According to an embodiment of the present invention, under the control of the dimming control signal, the voltage and/or current of the LED lamp load outputted from the switch power supply circuit module is varied by the feedback circuit module to effect the dimming in a stepped fashion.

The dimming device of the present invention provides a solution for effecting stepped dimming of a LED lamp which can work in preset two or more working states. According to one aspect of the present invention, the dimming signal generation module may be a switch signal detection circuit module which detects a momentary variation in on/off states of the power switch to enable the dimming of the LED lamp by; in this case, the working state of the LED lamp is controlled to alter in a cyclic manner by identifying momentary variation in on/off states of the power switch (e.g. the duration from the switching-off to the re-switching-on). Every time the power switch is switched on within a predetermined duration after being switched off, the LED lamp would switchover a working state according to a predetermined program. By repeatedly switching the power switch on and off (a duration of switching off is shorter than the predetermined duration), the LED lamp would operates in a predetermined set of working states in a cyclic manner according to the predetermined program. The LED lamp load in its any working state automatically resumes its brightest or dimmest state if the power switch is switched off for a period of time longer than a predetermined duration and then switched on.

According to another aspect of the present invention, the dimming signal generation module may be an analog signal detection circuit module which enables the dimming of the LED lamp using an external dimming signal or using a variable resistor.

The dimming signal generation module of the present invention may comprise both the switch signal detection circuit module and the analog signal detection circuit module, so as to possess two kinds of dimming features.

According to the present invention, the filter and rectifier circuit is connected to an external power supply, such as 220V main AC power source, to serve to filter out the interference noise of the AC power source and convert the AC power into DC power. A power switch may be provided between the main power supply and the filter and rectifier circuit for turning on or turning off the connection therebetween.

The switch power supply circuit module is connected to the LED lamp load, and comprises primarily a pulse-width modulation (PWM) controller, a high frequency transformer, and a power output circuit, so as to convert the DC power into a high frequency AC power, and control working frequencies to provide a proper voltage to the LED lamp load in order to drive the LED lamp load.

The switch signal detection circuit module detects a momentary variation in the state of the power switch and delivers the detection result to a microcontroller control circuit which then determines whether a dimming operation needs to be performed on the LED lamp.

The analog signal detection circuit module serves to detect a dimming signal received from an external DC signal source or a dimming signal generated by a variable resistor, and delivers the detection result to the dimming control module which then determines whether a dimming operation needs to be performed on the LED lamp. The dimming control module may be formed with the microcontroller control circuit.

The microcontroller control circuit can detect the output signal from the switch signal detection circuit module or the analog signal from the external DC signal source. The output of the microcontroller is connected to the power output circuit of the switch power supply circuit module. When a dimming signal is identified, the output of the microcontroller control circuit can adjust the magnitude of the current which flows from the power output circuit through the LED lamp load, thereby altering the brightness of the LED lamp to effect the dimming operation.

The feedback circuit module may be a constant current and stable voltage feedback circuit module, which serves to feed the voltage signal and/or current signal of the power output circuit back to the switch power supply circuit module, so as to provide the LED lamp load with a stable voltage and a constant current as required in normal operation of the LED lamp load. When a dimming operation is required, the microcontroller would alter the magnitude of the current coming out from the power output circuit by controlling the constant current and stable voltage feedback circuit module to effect stepped dimming of the LED lamp.

According to the present invention, the inclusion of the switch signal detection circuit module, the analog signal detection circuit module and the microcontroller control circuit module allows for the detection of the momentary variation of the state of the power switch or the detection of the dimming signal from the external DC signal source, and enables the microcontroller control circuit module to control alteration of a predetermined set of working states of the LED lamp load in a cyclic manner thereby effecting the dimming in a stepped fashion. The dimming device for LED lamp of the present invention may be used directly in conjunction with the power switch provided in the regular lines of illumination occasions without the need of any additional modifications, and therefore is easy to promote and beneficial to various illumination occasions with different requirements.

### Brief Description of the Drawings

Figure 1 is a schematic diagram of a circuitry of a dimming device for LED lamp according to the present invention, which utilizes a power switch to effect stepped dimming.
Figure 2 is a schematic diagram of a circuitry of a dimming device for LED lamp according to the present invention, which utilizes an external signal or a variable resistor to effect stepped dimming.
Figure 3 is a schematic diagram of a circuitry of a dimming device for LED lamp according to the present invention, which comprises both the power switch and the external signal or the variable resistor to effect stepped dimming.

### Detailed Description of the Invention

Generally, there are two approaches for controlling the brightness of a single LED. One of the approaches is to make use of the visual persistence of human eyes to realize brightness control with a pulse width modulation, namely to periodically change the pulse width (i.e. duty cycle) of emitted light. The human eyes would not get aware that a light emitting element is flickering provided that the cycle of light emission is short enough (i.e. the refresh rate is high enough). Since the pulse width modulation is preferably controlled in a digital way, a microcontroller is generally employed to provide driving signals for LED display, for example, almost all of the LED displays are effecting brightness control by means of pulse width modulation. The other approach would change the current flowing through the LED, namely to adjust the brightness of the LED lamp by controlling the output current of the power supply of the LED lamp. Except the saturation phenomenon found in red LEDs, the brightness of a LED of other colors is basically in direct proportion to the current flowing through the LED.

In order to realize a stable and reliable stepped dimming of LED lamp, a dimming device for LED lamp of the present invention comprises: a filter and rectifier circuit 1, a switch power supply circuit module 2, a feedback circuit module 3, a dimming signal generation module, and a dimming control module 5. The dimming signal generation module may be formed by a switch signal detection circuit module 4 or an analog signal detection circuit module 6, or it may comprise both of the circuit modules 4 and 6. In the case that the switch signal detection circuit module 4 is used, the dimming device of the present invention can effect stepped dimming of LED lamp with a power switch.

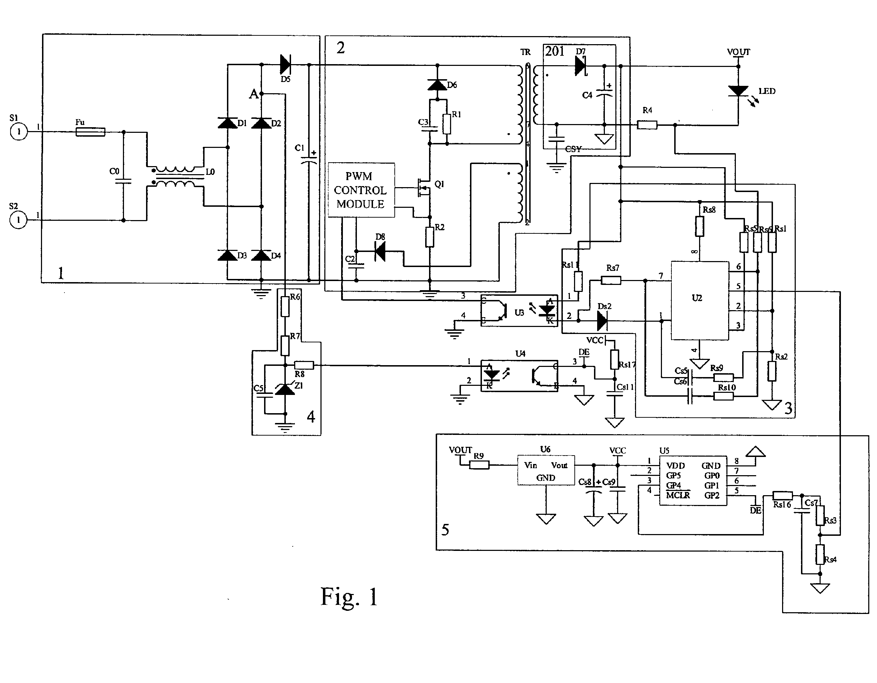

The filter and rectifier circuit (designated at reference numeral 1 in figs. 1-3) comprises a π filter and a bridge rectifier, which is connected with the main AC power supply via a power switch (not shown) to filter out the high frequency interference waves and to convert the AC input voltage into a DC pulse voltage. In addition to the filter and rectifier circuit 1 shown in fig. 1, the present invention may employ other suitable filters and rectifier circuits well known in the art.

The switch power supply circuit module (designated at reference numeral 2 in figs. 1-3) comprises primarily a PWM controller, a high frequency transformer TR, and a corresponding power output circuit. The voltage originating from the power supply passes through the filter and rectifier circuit to become a DC pulse voltage across the both ends of the capacitor C1, and this DC voltage would be delivered to the conversion circuit controlled by the PMW controller and would be transformed by the high frequency transformer TR into a low AC voltage. The low AC voltage is delivered to an input terminal of a second filter and rectifier circuit 201 of the power output circuit where it is converted into a stable low DC voltage which is then supplied to the LED lamp load.

The PWM controller controls a voltage / current signal of the high frequency transformer TR in each cycle by adjusting a duty cycle of high level or low level from a square wave of a given frequency, so as to control a magnitude of an output current of the second filter and rectifier circuit 201 to adjust the brightness of the LED lamp load. For example, if a frequency period is divided into 10 equal time slices, and the duty cycle or the ratio of high level to low level of the square wave is 1:9, then it represents a relatively low brightness; and if the duty cycle of high level to low level of the square wave is 0:10, which means the lamp is off as the voltage keeps at low level all the time. If the duty cycle of high level to low level is 5:5, it represents a medium brightness, and the duty cycle of high level to low level is 9:1, it represents a relatively high brightness. Further, if the duty cycle of high level to low level is 10:0, which means the voltage keeps at high level where the LED lamp is in the brightest state. The more the time slice, the more the brightness level. For example, in a LED display, a PWM allows for controlling 256 levels of brightness. For normal illumination purposes, 10 levels of brightness are good enough for a LED lamp.

The feedback circuit module (designated at reference numeral 3 in figs. 1-3) is preferably a constant current and stable voltage feedback circuit module 3, which is connected respectively with the LED lamp load and the switch power supply circuit module 2, and serves to sample a voltage or current flowing through the LED lamp load and then provides feedback to the PWM controller, in such a manner that the filter and rectifier circuit 201 is controlled for providing a stable voltage and constant current to the LED lamp load. In the feedback circuit module, a first photocoupler U3 provides a photoelectric isolation of the constant current and stable voltage feedback circuit module (CC/CV) 3 from the PWM controller. The another input terminal of the constant current and stable voltage feedback circuit module is connected to an output terminal of the dimming control module 5 for adjusting correspondingly the duty cycle of the PWM controller in response to the variation in the output terminal voltage of the dimming control module 5, so as to alter the current flowing through the LED lamp load to effect the dimming. The feedback circuit module 3 may comprise an operational amplifier U2 and peripheral circuits associated therewith. The operational amplifier can be any suitable operational amplifier in the prior art, such as TSM103. A reference voltage input terminal of the operational amplifier is connected with the output terminal of the dimming control module 5.

The switch signal detection circuit module (designated at reference numeral 4 in figs. 1-3) is connected at its input terminal to the output terminal of the filter and rectifier circuit at point A of the filter and rectifier circuit 1, and connected at its output terminal to the input terminal of the second photocoupler U4. In general, an illumination device is usually connected in series with a power switch and then with the main power supply. The dimming device of the present invention may not have a specialized switch unit but rather takes advantage of the regular power switch. That is, the terminals S1 and S2 of the filter and rectifier circuit 1 are connected in series with the power switch and then with the power supply. In this way, the switch signal detection circuit module 4 may directly detect the momentary on/off states of the power switch. On the other hand, the dimming device of the invention may comprise its own switch unit, for example, when this dimming device is used in a table lamp, the switch unit could be arranged at the terminals S1 or S2, or at any suitable positions in the filter and rectifier circuit 1. When the power switch or the switch unit of the dimming device is turned off momentarily, the voltage at point A would drop instantly, and the switch signal detection circuit module would deliver a high level (or low level) pulse signal to the input terminal 1 of the photocoupler U4 when the voltage drop at the point A is detected, thereby altering the momentary voltage level at the output terminal 3 of the photocoupler U4. The switch signal detection circuit module could be formed by a capacitor and a zener diode in parallel connection which are connected with several resistors in series, wherein the capacitor has one end grounded and the other end connected with the second photocoupler U4.

The dimming control module (designated at reference numeral 5 in figs. 1-3) may comprise a programmable microcontroller U5 and associated peripheral circuits well known in the art. The input terminal of the dimming control module 5 is connected to the output terminal of the second photocoupler U4, and the output terminal of the dimming control module 5 is connected to the input terminal of the constant current and stable voltage feedback circuit module 3. The programmable microcontroller U5 may be a PIC12F615 microcontroller, for example. The dimming control module 5 may further comprise a constant voltage regulator U6 for powering the microcontroller. The microcontroller is programmed such that the microcontroller controls the variation in voltage at its output terminal connected to the constant current and stable voltage feedback circuit module 3 when a variation in voltage (from high level voltage to low level voltage or vice versa) of the output terminal of the second photocoupler U4 is detected by the microcontroller. Any proper program known in the art may be applied in the microcontroller, or a program may be written for the specific microcontroller by a person skilled in the art, provided that the foregoing functions are performed.

As described above, the constant current and stable voltage feedback circuit module 3 usually comprises an operational amplifier and associated peripheral circuits. The voltage variation in voltage at the output terminal of the dimming control module 5 allows for controling the reference voltage of the operational amplifier in the constant current and stable voltage feedback circuit module 3, and adjusting the light emission of input diode of the first photocoupler U3. The constant current and stable voltage feedback circuit module 3 is connected with the PWM controller via the first photocoupler U3 to isolate and amplify the duty factor of switch transistor in the switch power supply circuit module, and the electric energy with different duty factors would be isolated and converted into DC pulse current by the isolation of the transformer TR. After being filtered by the low pass filter, the pulse current is changed into a DC current having a magnitude that is a function of the variation of a control signal. Therefore, controlling the output current of the switch power supply circuit module enables the constant current and stable voltage feedback circuit module 3 to change the current flowing through the LED lamp load, whereby effecting stepped dimming.

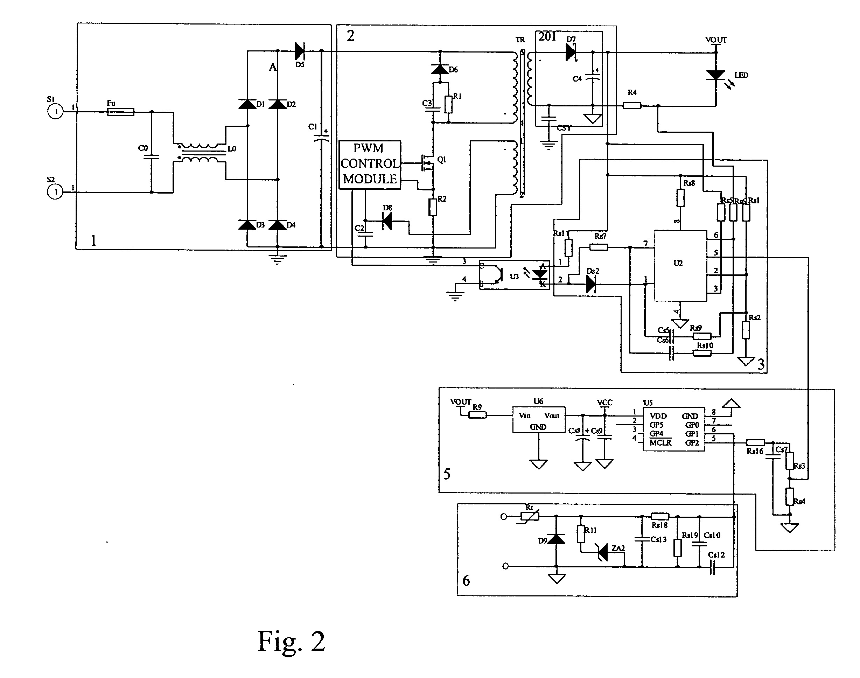

The dimming signal generation module of the present invention may further comprise an analog signal detection circuit module 6 (designated at reference numeral 6 in figs. 2-3). The analog signal detection circuit module 6 has an input terminal connected to an external DC signal source, and an output terminal connected to another input terminal of the dimming control module 5. The microcontroller of the dimming control module 5 is programmed such that the microcontroller controls the variation in voltage at its output terminal connected to the constant current and stable voltage feedback circuit module 3 when a dimming signal outputted by the analog signal detection circuit module 6 is detected by the microcontroller, so as to change the current flowing through the LED lamp load via the constant current and stable voltage feedback circuit module 3, thereby effecting a stepped dimming. The external DC signal source may be any signal source capable of generating DC voltage signal. In addition, the analog signal detection circuit module 6 may also use a variable resistor to generate the analog signal. In this regard, the analog signal detection circuit module 6 comprises the variable resistor, and associated networks of resistors and capacitors, and preferably is powered by the switch power supply circuit module 2.

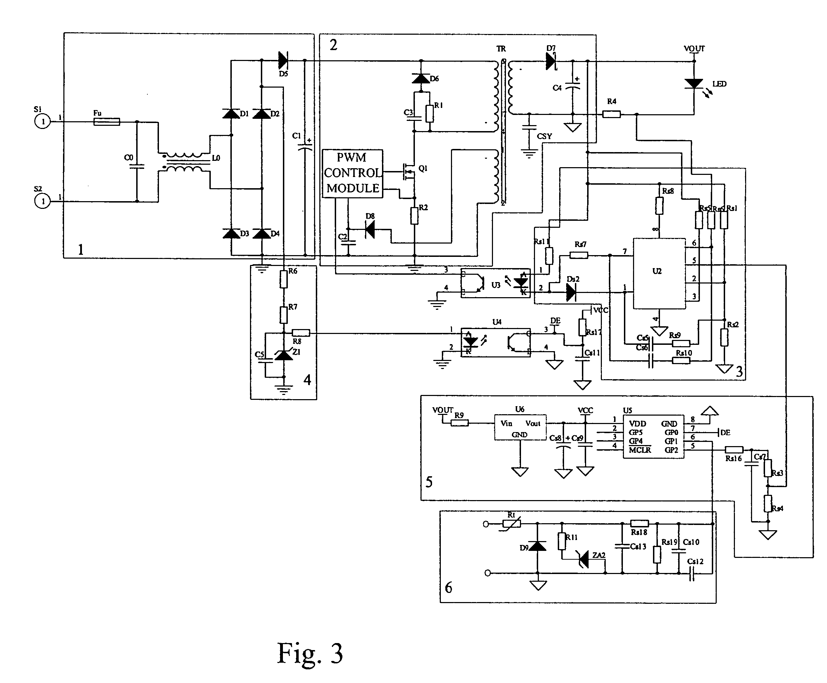

As an alternative, only the analog signal detection circuit module 6 is used for adjusting the brightness of the LED without the inclusion of the switch signal detection circuit module 4. Such an approach also falls within the scope of the present invention. Figures 1-3 respectively represents three embodiments of the present invention, wherein the dimming device shown in fig. 1 comprises the switch signal detection circuit module 4; the dimming device shown in fig. 2 comprises the analog signal detection circuit module 6; and the dimming device shown in fig. 3 comprises both the switch signal detection circuit module 4 and the analog signal detection circuit module 6 concurrently.

The integration of the switch signal detection circuit module 4 and/or the analog signal detection circuit module 6 and the dimming control module 5 is the essence of the present invention. The switch signal detection circuit module 4 samples a DC pulse voltage at its sampling point. In particular, when the power switch is switched on or off, the voltage at point A in figs. 1 and 3 would drop instantly, and the switch signal detection circuit module 4 delivers a pulse signal of high level (or low level) to the input terminal of the second photocoupler U4 when the voltage drop at the point A is detected, thereby changing the voltage level at the output terminal of the second photocoupler U4 into the low level (or high level); while the voltage variation at the output terminal of the second photocoupler U4 is detected by the microcontroller of the dimming control module 5, the microcontroller would output correspondingly a voltage signal to the constant current and stable voltage feedback circuit module 3 to alter the magnitude of the current flowing through the LED lamp load, the dimming of the LED lamp load is thus effected. Moreover, when the analog signal detection circuit module 6 detects the dimming signal from the external DC signal source, it would deliver a detection result to the dimming control module 5, the microcontroller of the dimming control module 5 would then output a voltage signal to the constant current and stable voltage feedback circuit module 3, thereby changing the magnitude of the current flowing through the LED lamp load to effect dimming.

According to the present invention, every time the LED dimming device detects the switching-on of the power switch within the predetermined duration after being switched off, the working state of the LED lamp load would be varied according to the predetermined program. Repeatedly switching the power switch (the switching-off duration is shorter than the predetermined duration) enables the LED lamp load to work in the predetermined working states in a cyclic manner. The LED lamp load in its any working state automatically resumes its brightest state if the power switch is switched off for a period of time longer than the predetermined duration and then switched on. According to the actual needs, the predetermined set of working states of the LED lamp load may comprise 2-10 working states. The working state of the LED lamp load may vary from the brightness state to the darkest state in a stepped manner and then revert directly to the brightness state; alternatively, the working state may vary from the darkest state to the brightness state in a stepped manner and then revert directly to the darkest state.

The "predetermined duration" herein is determined by a capacitor in the switch signal detection circuit module 4, and the capacitance of the capacitor may be selected to distinguish whether the switching off duration of the switch is longer than the "predetermined duration" or not. The predetermined duration is usually set to about 0 - 10 seconds, preferably 0.1 - 3 seconds, and more preferably 0.2 - 2 seconds.

According to the present invention, selection and adjustment of parameters and modification of the predetermined program allows for another implementation of dimming. In particular, an external DC signal source is used to effect LED dimming, as shown in figs. 2 and 3. When a dimming signal originating from the external DC signal source is detected by the analog signal detection circuit module 6, the analog signal detection circuit module 6 would deliver a signal detection result to the dimming control module 5 in which the microcontroller adjusts the duty factor of the PWM controller through the feedback circuit module 3, and alters the magnitude of the current which flows from the power output circuit through the LED lamp load, so as to change the brightness of the LED lamp. The dimming operation is thus effected.

It should be understood that the above description is provided merely for illustrating the principle of the present invention, and should not be construed as limiting the present invention to the specific configurations and operations as described and shown hereinbefore. While many corresponding modifications as well as variations can be made to the technical solutions of the present invention by a person skilled in the art without departing from the teachings thereof, all such modifications, variations and equivalents should fall within the scope of the present invention.

## Claims

1. A dimming device for a light emitting diode (LED) lamp, comprising:
a filter and rectifier circuit connected to a power supply through a power switch for converting an input AC voltage into a DC pulse voltage;
a switch power supply circuit module having a terminal connected to the filter and rectifier circuit for converting the DC pulse voltage into a stable DC voltage which is supplied to a LED lamp load;
a feedback circuit module having a terminal connected to another terminal of the switch power supply circuit module, the feedback circuit module being capable of sampling a voltage and/or current signal of the LED lamp load and delivering a feedback signal to the switch power supply circuit module responsive to the sampled signal;
a dimming signal generation module comprising a switch signal detection circuit module for detecting a momentary variation in on/off states of the power switch and converting the momentary variation into a dimming signal which is delivered to a dimming control module, or an analog signal detection circuit module for detecting a dimming signal received from an external signal source and delivering the detected signal to the dimming control module, or a combination thereof;
wherein the dimming control module which receives the dimming signal has a terminal connected to the feedback circuit module, and generates and delivers a dimming control signal to the feedback circuit module in response to the received dimming signal, and the feedback circuit module is then controlled by the dimming control module to provide the feedback signal to the switch power supply circuit module, thereby controlling alteration of a predetermined set of working states of the LED lamp load in a cyclic manner to effect the dimming in a stepped fashion.

2. A dimming device as claimed in claim 1, wherein in the case that the switch signal detection circuit module is used for the dimming, the LED lamp load in its any working state automatically resumes its brightest or dimmest state if the power switch is switched off for a period of time longer than a predetermined duration and then switched on.

3. A dimming device as claimed in claim 2, wherein the predetermined duration is 0 - 10 seconds, more preferably 0.1 - 3 seconds, and most preferably 0.2 - 2 seconds.

4. A dimming device as claimed in claim 1, wherein the switch signal detection circuit module has an input terminal connected to an output terminal of the filter and rectifier circuit, and an output terminal connected to an input terminal of the dimming control module via a second photocoupler.

5. A dimming device as claimed in claim 1, wherein the feedback circuit module has an output terminal connected to the switch power supply circuit module via a first photocoupler.

6. A dimming device as claimed in claim 1, wherein the LED lamp load comprises 2-10 working states of brightness.

7. A dimming device as claimed in claim 1, wherein the switch power supply circuit module comprises a pulse-width modulation (PWM) controller, a high frequency transformer (TR), and a power output circuit having a second filter and rectifier circuit (201), wherein the DC pulse voltage from the filter and rectifier circuit is delivered to a conversion circuit controlled by the PMW controller and converted by the high frequency transformer into a low AC voltage which is converted into a stable low DC voltage by the second filter and rectifier circuit (201), and the stable low DC voltage being supplied to the LED lamp load;
wherein the PWM controller controls a voltage and/or current signal of the high frequency transformer in each cycle by adjusting a duty cycle of high level or low level from a square wave of a given frequency, so as to control a magnitude of an output current of the second filter and rectifier circuit to adjust the brightness of the LED lamp load.

8. A dimming device as claimed in claim 7, wherein the feedback circuit module is a constant current and stable voltage feedback circuit module, which has an output terminal connected to the PWM controller via the second photocoupler, a first input terminal for sampling the voltage and/or current signal of the LED lamp load, and a second input terminal connected to an output terminal of the dimming control module for adjusting the duty cycle of the PWM controller in response to the variation in the output terminal voltage of the dimming control module so as to alter the current flowing through the LED lamp load.

9. A dimming device as claimed in claim 8, wherein the dimming control module comprises a microcontroller and peripheral circuits associated with the microcontroller, and the constant current and stable voltage feedback circuit module comprises an operational amplifier and peripheral circuits associated with the operational amplifier;
wherein the dimming control module has an input terminal connected to an output terminal of the switch signal detection circuit module via a second photocoupler, the microcontroller is programmed such that the microcontroller controls the variation in voltage at its output terminal connected to the constant current and stable voltage feedback circuit module when a variation in voltage of the second photocoupler is detected, thereby controlling a reference voltage of the operational amplifier to adjust the duty cycle of the high or low level of the PWM controller.

10. A dimming device as claimed in claim 1, wherein the analog signal detection circuit module (6) has an input terminal connected to an external DC signal source or a variable resistor capable of generating an analog signal, and an output terminal connected to an input terminal of the dimming control module (5) for controlling the dimming signal.

11. A dimming device as claimed in claim 1, wherein every time the switch signal detection circuit module detects the switching-on of the power switch within a predetermined duration after switching-off of the power switch, the dimming signal is generated and delivered to the dimming control module which in turn generates the dimming control signal for controlling the alteration of a brightness state of the LED lamp load in the preset cycle; the predetermined working brightness states of the LED lamp load are varied through repeatedly switching the power switch on and off, wherein the switching-off duration is shorter than the predetermined duration.

12. A dimming device as claimed in claim 1, wherein under the control of the dimming control signal, the voltage and/or current of the LED lamp load outputted from the switch power supply circuit module is varied by the feedback circuit module to effect the dimming in a stepped fashion.

13. A dimming device as claimed in claim 1, wherein the analog signal detection circuit module comprises an variable resistor, and delivers a dimming signal generated by the variable resistor to the dimming control module wherein a corresponding dimming control signal is generated for controlling alteration of a predetermined set of working states of the LED lamp load in a cyclic manner to effect the dimming in a stepped fashion.
